# EUROPÄISCHE PATENTSCHRIFT

(11) **EP 1 185 473 B1**
(45) Veröffentlichungstag und Bekanntmachung des Hinweises auf die Patenterteilung: **27.08.2003**
(21) Anmeldenummer: 00943631.2
(22) Anmeldetag: 24.05.2000
(51) Int. Cl.: B65G 43/08, B07C 5/12

(54) **VORRICHTUNG ZUM HANDHABEN VON STÜCKGÜTERN**
DEVICE FOR HANDLING INDIVIDUALLY PACKAGED GOODS
DISPOSITIF POUR LA MANIPULATION DE MARCHANDISES COLISEES

(30) Priorität: 15.06.1999 DE 19927251
(43) Veröffentlichungstag der Anmeldung: 13.03.2002
(73) Patentinhaber: SIEMENS AKTIENGESELLSCHAFT, 80333 München (DE)
(72) Erfinder: TANZ, Torsten, D-78247 Hilzingen (DE)
(86) Internationale Anmeldenummer: DE0001664
(87) Internationale Veröffentlichungsnummer: WO00076887

(56) Entgegenhaltungen:
- EP-A- 0 563 824
- EP-A- 0 613 730
- WO-A-96/32205
- WO-A-98/32679
- US-A- 3 653 485
- US-A- 5 041 907
- US-A- 5 165 520

## Beschreibung

Die Erfindung betrifft eine Vorrichtung zum Handhaben von Stückgütern nach dem Oberbegriff des Anspruches 1. Unter Handhabung wird hier Vereinzelung und/oder Ausrichtung und/oder Sortierung und/oder Speicherung von Stückgütern, die mittels Transportmitteln zu- und abgeführt werden, verstanden. Stückgüter sind u.a. Pakete, Päckchen, Bündel von Zeitschriften, Behälter, Paletten und sackartige Güter. Die Stückgüter werden entweder ungeordnet nebeneinander liegend, wobei durch eine Vorverarbeitung sichergestellt ist, daß keine Stückgüter übereinander liegen, zugeführt, oder die Stückgüter werden vereinzelt mit definierten Abständen zugeführt. Nach der Handhabung durch die Vorrichtung werden die Stückgüter geordnet zu einer weiteren Bearbeitung abgeführt. Das geordnete Abführen kann dazu benutzt werden, eine bestimmte Reihenfolge (Sequenz) der Stückgüter am Ausgang der og. Anordnung herzustellen, die für eine weitere Bearbeitung notwendig oder vorteilhaft ist.

Nach dem gegenwärtigen Stand der Technik gibt es keine Vorrichtung, die die Funktionen Vereinzeln, Ausrichten, Speichern, Sortieren einschließlich Sequenzen platzsparend mit geringem Aufwand ausführt.
In EP 780328 A1 und US 56 38 938 werden Vereinzelungseinrichtungen für Pakete beschrieben. Die Nachteile dieser bekannten Lösungen bestehen in großem Platzbedarf, insbesondere Baulänge, und der unsicheren Vereinzelung bei unterschiedlich großen Paketen.
Das Ausrichten von Stückgütern rechtwinklig zur Förderrichtung während des Transports durch spezielle Rollenförderer ist Stand der Technik.

Das Sortieren von Stückgütern wird gegenwärtig durch verschiedenartige, spezielle Techniken, die alle auf einer linearen oder zirkulären Transportrichtung basieren, realisiert.

Zu nennen sind folgende Lösungen: Kippschalen-Sorter (siehe Firmenschriften Crisplant A.S., Beumer KG), Quergurt-Sorter (s. Sandvik,. Crisplant A.S), Pusher-Sorter (Sandvik, Lippert), Schuh-Sorter (Dematic, TGW), Popup-Sorter (Van der Lande; Dematic).

Das Speichern oder auch Zwischenspeichern von Stückgütern geschieht gegenwärtig manuell oder mechanisch unterstützt (durch Abstapeln auf Flur, Einspeichern mit Gabelstaplern in Regale), teilautomatisiert (in sog. Durchlaufspeichern, mit manueller oder automatisierter Beschickung) oder vollautomatisiert in Hochregalspeichern, die automatisch mit Regalbediengeräten beschickt und entleert werden.

Der in Anspruch 1 angegebenen Erfindung liegt daher die Aufgabe zugrunde, eine Vorrichtung .zum platzsparenden Handhaben zu schaffen, die die Stückgüter vereinzelt und/oder ausrichtet und/oder speichert und/oder sortiert, einschließlich nach einer festgelegten Reihenfolge.
Die arrayförmige Anordnung der die Stückgüter in vier Richtungen senkrecht zueinander in einer Ebene bewegenden Fördermittel sowie die Identifizierung und ständige Verfolgung der Stückgüter auf der Arrayfläche schafft die Voraussetzung, die Stückgüter ohne Kollision frei zu bewegen und auszurichten. Der oder die Ein- und Ausgänge befinden sich an den Rändern der Arrayfläche. Die Bewegung erfolgt gemäß der durchzuführenden Handhabung. Werden z.B. an einem Eingang zu vereinzelnde Stückgüter eng nebeneinander und hintereinander auf die Arrayfläche transportiert, so wird nach der Ermittlung der Lage der Stückgüter ein Stückgut nach dem anderen mit festgelegtem Abstand durch gezielte Ansteuerung der dafür notwendigen Fördermittel zu einem Ausgang transportiert, wobei gleichzeitig eine Ausrichtung der Stückgüter erfolgen kann. Sollen die Stückgüter sortiert werden, so werden Abbilder der Stückgüter aufgenommen und die Handhabungsinformationen, in diesem Fall Adressen als Sortierinformationen ermittelt. Dann erfolgt der Transport zu den laut Sortierplan vorgesehenen Ausgängen. Bei diesen Transporten, die nach Möglichkeit auch parallel durchgeführt werden, erfolgt eine ständige Verfolgung jedes einzelnen Stückgutes, so daß die Bewegungen definiert und kollisionsfrei durchgeführt werden können. Ist für den Ablauf ein Zwischenspeichern notwendig, so ist dies ohne weiteres möglich. Die Stückgüter können je nach Bedarf sowohl in einem speziellen Speicherbereich als auch dezentral zwischengespeichert werden, wobei der Speicher dynamisch vergrößert oder verkleinert werden kann und der Zugriff auf die gespeicherten Stückgüter wahlfrei ist bei hoher Variabilität der Speicherstrategie.

Die Vorrichtung zum Handhaben ist also funktional sehr vielseitig und dabei sehr kompakt.

Vorteilhafte Ausgestaltungen der Erfindung sind in den Unteransprüchen dargestellt.

Wird das Fördermittel nach Anspruch 2 mit einem kugelförmigen Transportteil ausgeführt, das ohne feste Achse gelagert ist und beispielsweise elektromechanisch so angetrieben ist, daß die Richtung frei wählbar ist, so ist es möglich, viele Fördermittel auf einer bestimmten Arrayfläche unterzubringen und durch die freie Richtungswahl mit den Stückgütern möglichst kurze Wege zurückzulegen.

Vorteilhaft ist es auch nach Anspruch 3, die Fördergeschwindigkeit sowie den Beschleunigungs- und Bremsverlauf in die Steuerung mit einzubeziehen, um so Bewegungsvorgänge besser aufeinander abstimmen zu können und die Transportzeiten der Stückgüter auf der Arrayfläche zu minimieren.

Nach Anspruch 4 ist es vorteilhaft, zur sicheren Identifizierung und Trennung der Stückgüter, z.B. wenn sie aneinanderliegen, neben der Bildaufnahme- und Auswerteeinrichtung eine das Höhenprofil aufnehmende Sensoreinrichtung einzusetzen.

Zur Verfolgung der Bewegung der Stückgüter kann es nach Anspruch 5 auch vorteilhaft sein, die Fördermittel mit Druckaufnehmern auszustatten, die detektieren, ob sich ein Stückgut auf dem Fördermittel befindet.

Nachfolgend wird die Erfindung in einem Ausführungsbeispiel anhand der Zeichnungen näher erläutert.
Dabei zeigen
- FIG 1: eine schematische, blockbildartige, dreidimensionale Darstellung der Vorrichtung zum Handhaben
- FIG 2: eine schematische Draufsicht auf die Anordnung, die Aufteilung in die Funktionsbereiche Aufgeben, Vereinzeln, Sortieren, Speichern und Abgeben darstellend
- FIG 3: einen Ablaufplan zum Handhaben der Stückgüter mit den Teilen
- FIG 3a: Vereinzeln und Beginn des Sortierens
- FIG 3b: Beenden des Sortierens in Ausgänge einschließlich Ausrichten
- FIG 3c: Speichern
- FIG 3d: Erzeugen einer Reihenfolge (Sequenzen)
- FIG 4a-h: ein vereinfachtes Beispiel zur Veranschaulichung der Handhabungsvorgänge in unterschiedlichen Phasen

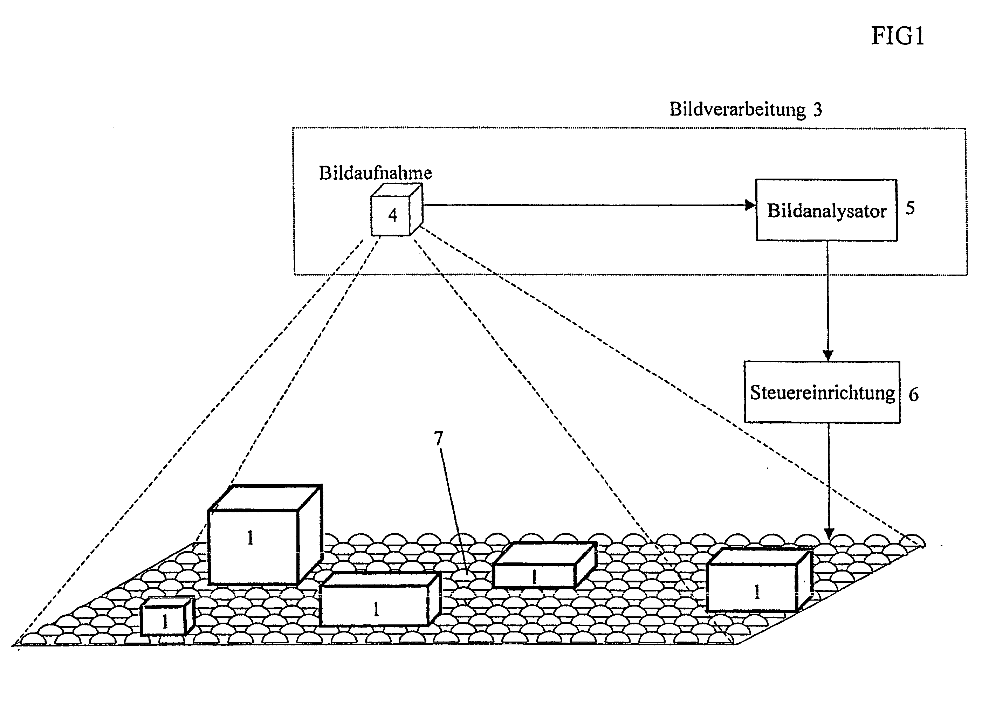

Die aufgegebenen Stückgüter 1 werden gemäß FIG 1 mittels vielfach in einer matrizen- oder arrayartigen Form angeordneten Fördermitteln 7 mit kugelförmigen Transportteilen auf denen die Stückgüter bewegt werden, separat in beliebige horizontale Richtungen bewegt. Jedes einzelne Fördermittel 7 ist zusätzlich durch eine variable Geschwindigkeit und variable Beschleunigung gekennzeichnet. Folgende Patenschriften zeigen Beispiele zur Gestaltung dieses Fördermittels: US5808395 "Torque motor" und US5410232 "Spherical motor and method".

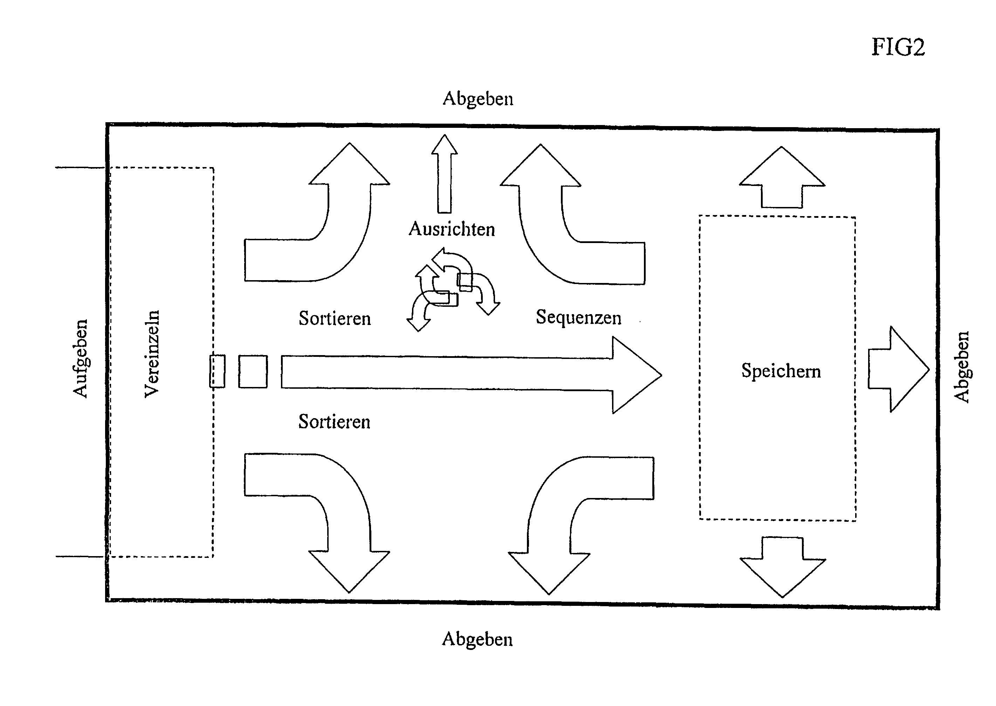

Es werden alle oder nur diejenigen Fördermittel 7 angetrieben, auf denen sich Stückgüter 1 befinden bzw. in Kürze befinden werden. Dieses Prinzip wird in FIG 2 veranschaulicht. Durch die separat angetriebenen Fördermittel 7 ist es möglich, detinierte Abstände zwischen den aufgegebenen Stückgütern 1 zu erzeugen und sie somit gesteuert bzw. kontrolliert zu vereinzeln. Des weiteren besteht die Möglichkeit, die Stückgüter 1 in der Ebene beliebig auszurichten. Für die gezielte Steuerung der Anordnung ist es notwendig, jedes Stückgut 1 bei der Aufgabe zu identifizieren, d.h. hauptsächlich seine Zieiinformation aufzunehmen, und die Lage und Grundrisse (Form) des Stückgutes 1 zu erkennen und das Stückgut 1 anhand dieser Merkmale zu verfolgen. Die dazu erforderliche Einrichtung wird als Bildverarbeitungseinrichtung 3 bezeichnet. Die Bildverarbeitungseinrichtung 3 besteht aus einer Bildaufnahmeeinrichtung 4 und einem Bildanalysator 5. Die Bildaufnahmeeinrichtung 4 ist zweckmäßigerweise über der Fördermittelebene angeordnet. Die Daten hinsichtlich Zielinformation, gegenwärtige Lage und Grundriß der Stückgüter 1 werden an eine Steuereinrichtung 6 übermittelt. Diese Steuereinrichtung 6 ermittelt und koordiniert auf der Basis von implementierten Algorithmen und einem regelmäßigen Auffrischen der Information über den gegenwärtigen Zustand mittels der Bildverarbeitungseinrichtung 3 den Bewegungsablauf aller Stückgüter 1 von der Aufgabe bis zur Abführung zur nachfolgenden Bearbeitung. Mit den Fördermitteln 7, der Bildverarbeitungseinrichtung 3 und der Steuereinrichtung 6 ist es möglich, jedes Stückgut 1 von der Aufgabestelle zu der durch die Zielinformation bestimmten Abgabestelle zu transportieren. Die in der Steuereinrichtung 6 implementierten Algorithmen gewährleisten den parallelen Ablauf dieses Prozesses für alle aufgegebenen Stückgüter 1, so daß keine Kollisionen auftreten und ein weg- und zeit-optimaler Bewegungsablauf sichergestellt ist. Zur Speicherung der Stückgüter 1 wird dieser Transportprozeß zu einer Speicherzielstelle ausgeführt, dort für eine definierte Zeitspanne unterbrochen oder durch eine durch die Steuereinrichtung 6 initiierte Ausspeicherungsanforderung wieder aufgenommen. Dieser Vorgang beschreibt die Speicherfunktion. Im Zuge der Ausspeicherung und/oder während des Transports zur Abgabestelle kann, bedingt durch die Verfügbarkeit von mehrdirektionalem Transport, Speicherfunktion und diskreter Steuerung des Transportweges einzelner Stückgüter 1, eine vorab definierte oder während des Prozesses zu erzeugende Reihenfolge der Stückgüter 1 bei der Ankunft dieser an der Abgabestelle erzeugt werden. Diese Funktion ist zum Beispiel hilfreich, wenn die Stückgüter 1 in der umgekehrten Reihenfolge ihrer weiteren Bearbeitung von der Abgabestelle in ein Transportmittel verladen werden sollen.

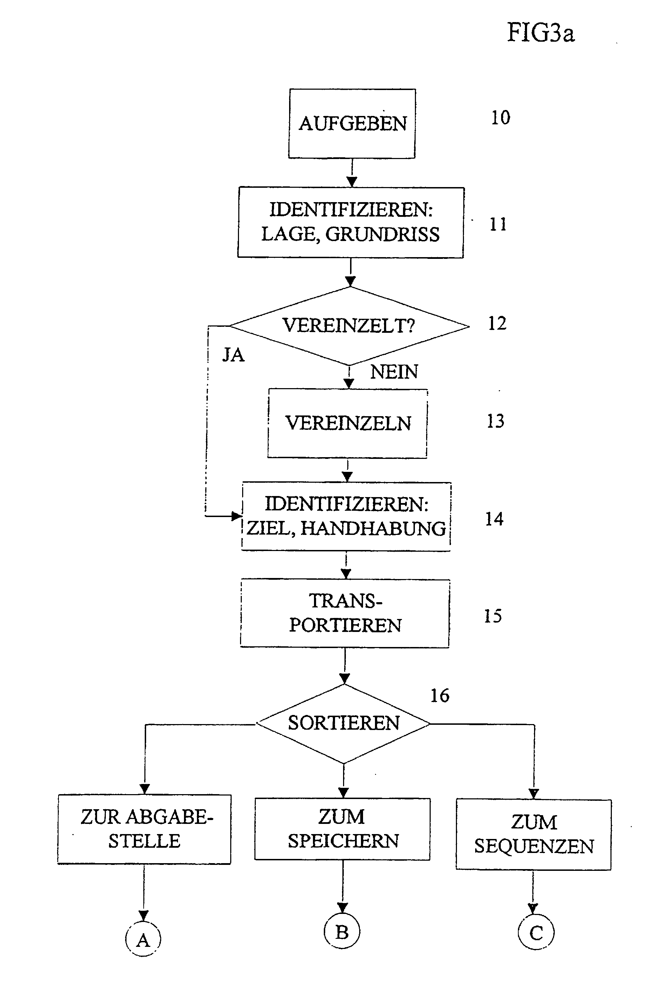

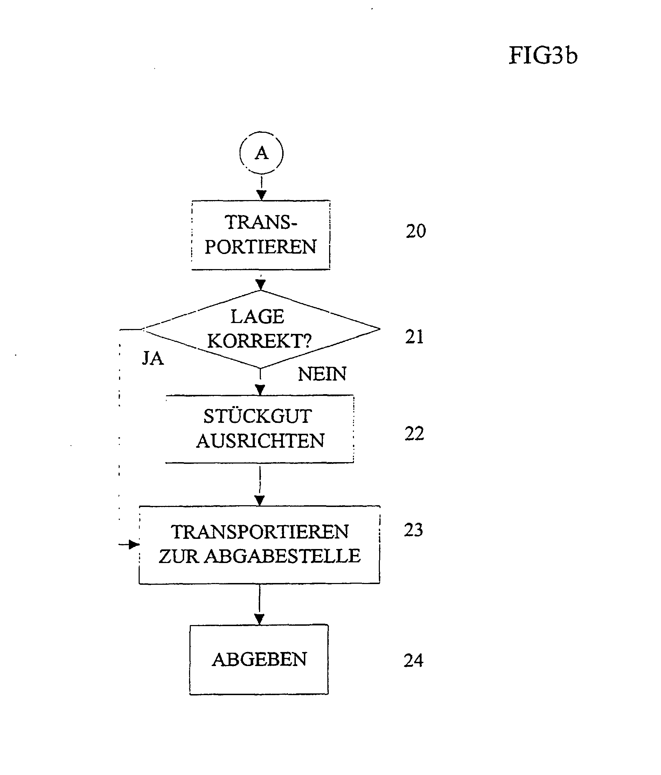

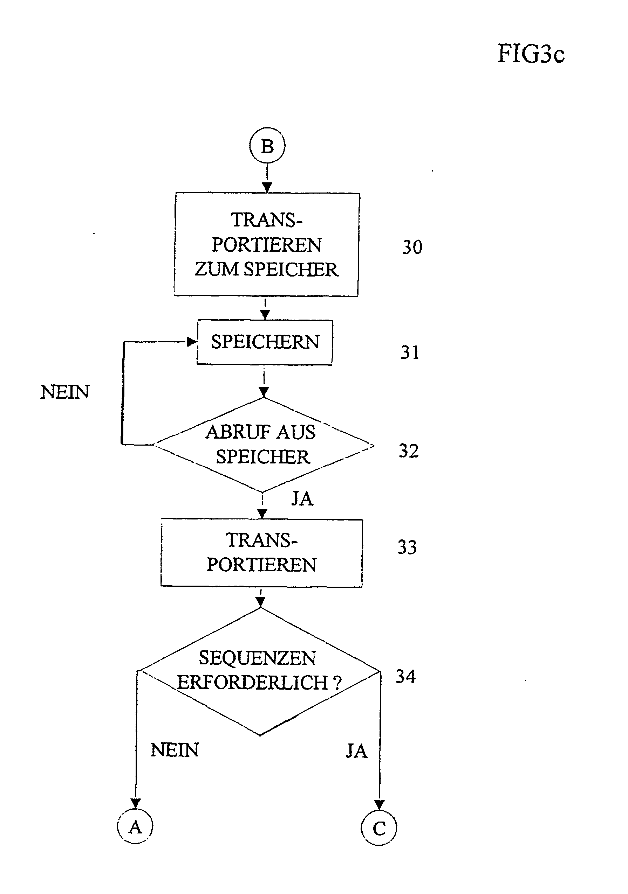

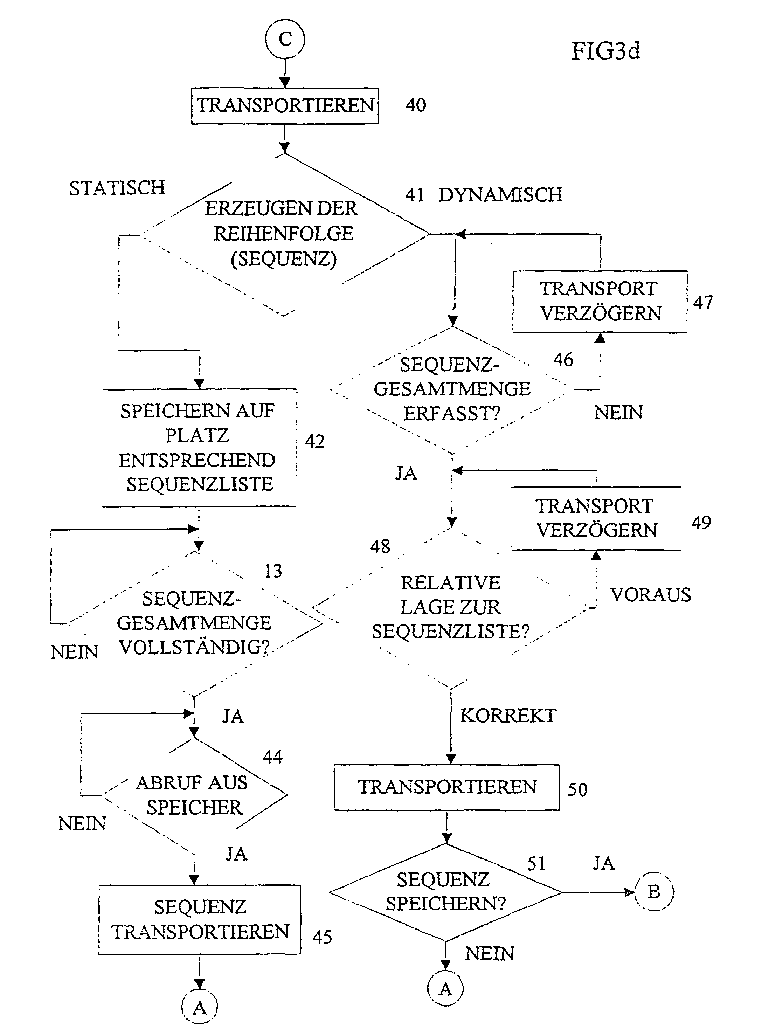

Im folgenden wird der Handhabungsablauf anhand der FIG 3a-d erläutert.

Der Ablauf wird für ein Stückgut 1 beschrieben. Der Übersicht halber wird die gleichzeitige Handhabung mehrerer Stückgüter 1 nicht dargestellt, es ist aber klar, daß dafür eine parallele kontinuierliche Koordination der Bewegungsabläufe der Stückgüter 1 zur Vermeidung von Kollisionen durch die Steuereinrichtung 6 mit Hilfe der Bildverarbeitungseinrichtung 3 sowie ggf. weiterer Sensoren erfolgt. Nach dem Aufgeben 10 des Stückgutes 1 mittels nicht dargestellter Transporteinrichtungen an der Aufgabestelle erfolgt das Ermitteln von Lage und Grundriß 11. Dabei wird auch festgestellt, ob das Stückgut 1 vereinzelt werden muß 12, da es beispielsweise dicht neben einem anderen Stückgut 1 liegt. Ist dies der Fall, so erfolgt die Vereinzelung 12. Danach wird die Handhabungsinformation auf dem Stückgut (in diesem Fall die Empfängeradresse als Sortierinformation) ermittelt und daraus die notwendige Handhabung 14. Anschließend wird das Stückgut 1 weitertransportiert 15 und der entsprechende Sortiervorgang wird gestartet 16. Soll in diesem Zusammenhang das Stückgut 1 zu einer bestimmten, der Empfängeradresse zugeordneten Abgabestelle transportiert werden 20, so wird überprüft, ob die Lage des Stückgutes 1 korrekt ist 21. Wenn ja, wird das Stückgut 1 zur Abgabestelle transportiert 23 und an externe Transportmittel abgegeben 24. Wenn nein, erfolgt vorher noch ein Ausrichten 22. Muß im Rahmen des Sortiervorganges 16 das Stückgut 1 gespeichert werden, so wird es zu einem Speicherbereich transportiert 30 und dort gespeichert 31. Das Speichern dauert so lange bis das Stückgut 1 abgerufen wird 32. Nach dem Abruf wird es abtransportiert 33, entweder zur betreffenden Abgabestelle, wenn kein Sequenzen erforderlich ist 34, oder es erfolgt ein Transportieren 40, um eine vorgesehene Reihenfolge zu erzeugen 41. Dazu gibt es eine statische und eine dynamische Variante. Bei der statischen Variante wird das Stückgut 1 auf einem Platz entsprechend Reihenfolgeliste gespeichert 42. Wurden alle Stückgüter in der vorgesehenen Reihenfolge abgespeichert 43, und es liegt ein Abruf aus dem Speicherbereich vor 44, so wird die gesamte Reihenfolge zur vorgesehenen Abgabestelle transportiert 45. Bei der dynamischen Variante wird zuerst überprüft, ob die Gesamtmenge der Reihenfolge erfaßt wurde 41. Ist das nicht der Fall, so wird der Weitertransport verzögert 47, was im Extremfall ein Abstoppen bedeuten kann. Nach der Erfassung wird die relative Lage des Stückgutes 1 im Vergleich zur Lage gemäß Reihenfolgeliste geprüft 48. Befindet es sich zu weit vorn, wird sein Transport wiederum verzögert 49, notfalls bis zum Abstoppen. Wenn notwendig, erfolgt noch zusätzlich eine seitliche Bewegung, damit die richtigen, nachfolgenden Stückgüter 1 nachrücken können. Hat das betreffende Stückgut 1 die richtige Position wird es weitertransportiert. Liegt die richtige Gesamtreihenfolge vor, erfolgt noch die Entscheidung, ob die Sequenz gespeichert werden soll oder direkt zu einer Abgabestelle transportiert wird 51.

Dieser allgemeine Ablauf wird nun an einem einfachen Beispiel mit einer beispielhaften Gutmenge erläutert.

Es sind folgende Komponenten vorhanden:
1. Ein Transportmittel zum Aufgeben der Güter
2. Erfindungsgemäße Vorrichtung zum Handhaben
3. Acht Transportmittel (Kennzeichnung TM I - VIII) zum Abführen der Güter und damit gleichzeitig Sortierendstellen am Ausgang der Vorrichtung

Die beispielhafte Gutmenge besteht aus zehn (Kennzeichnung 1 - 10) quaderförmigen Stückgütern.

Folgende Handhabungsaufgaben sind durch die Vorrichtung zu realisieren:
1. Aus den Stückgütern gekennzeichnet mit 1 , 2 , 3 und 4 ist dynamisch eine Sequenz entsprechend der Reihenfolge der Numerierung zu erzeugen und diese ist dem Transportmittel (TM) VIII zuzuführen.
2. Das Stückgut 5 ist dem TM II zuzuführen.
3. Das Stückgut 6 ist dem TM I zuzuführen.
4. Das Stückgut 7 ist zu speichern und dann dem TM V zuzuführen.
5. Aus den Stückgütern 8 , 9 und 10 ist statisch eine Sequenz in der Reihenfolge der Numerierung zu erzeugen und diese ist dann ohne weiteres Speichern dem TM IV zuzuführen.

Neben den oben dargestellten Handhabungsaufgaben sind die Stückgüter entsprechend den Handhabungsaufgaben durch die Vorrichtung auszurichten.

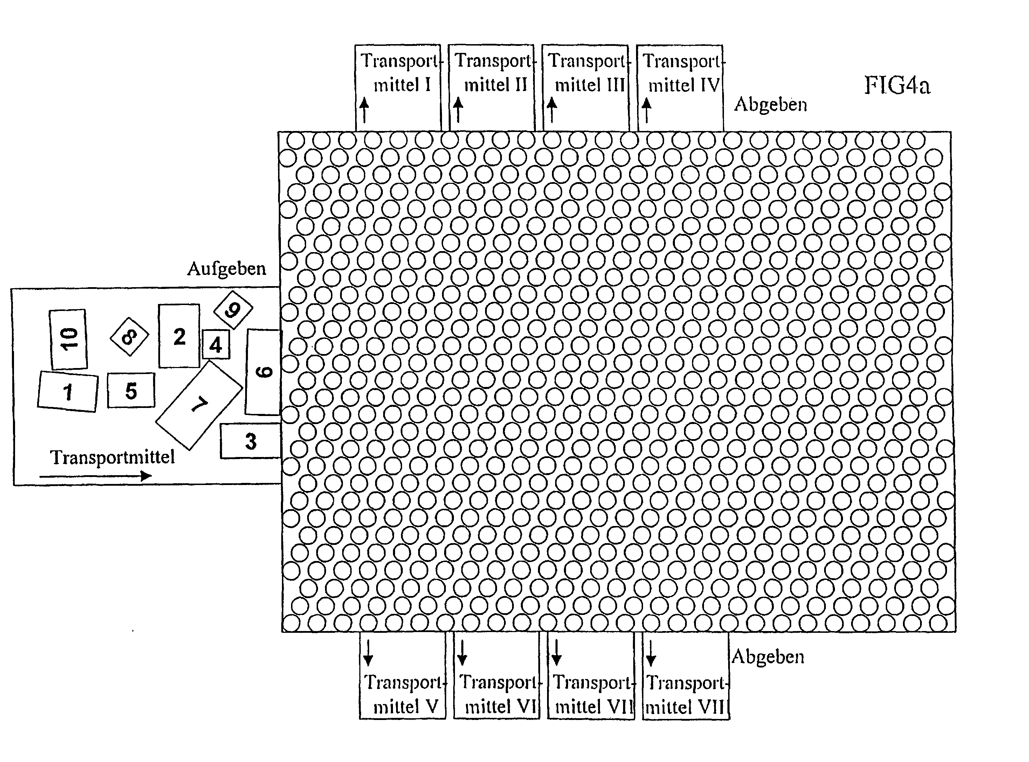

FIG 4a zeigt den Ausgangszustand. Die Stückgüter 1 bis 10 werden einlagig, in ungeordneter Reihenfolge und verschiedensten horizontalen Ausrichtungen durch das Transportmittel "Aufgeben" der Vorrichtung zugeführt, d.h. aufgegeben. Wenn sie auf die Vorrichtung gelangen, wird die Lage der Stückgüter und ihr Abstand zueinander ermittelt. Aus diesen Informationen ermittelt die Steuereinrichtung 6 die notwendigen Bewegungsabläufe für jedes einzelne Stückgut.

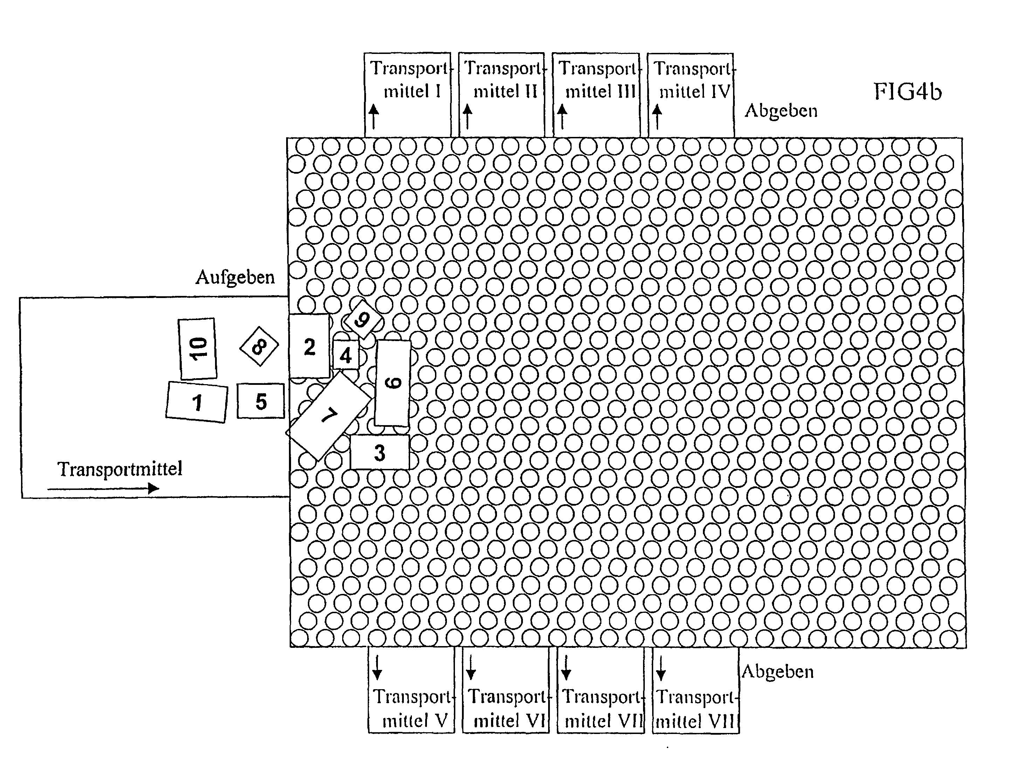

FIG 4b zeigt den Beginn des Vereinzelungsprozesses. Sind die Stückgüter vereinzelt, wird ihr Ziel, d.h. die Sortierendstelle - hier die Transportmittel I - VIII- mittels der Bildverarbeitungseinrichtung 3 und der Steuerungseinrichtung 6 identifiziert und die entsprechenden Handhabungsaufgaben werden ihnen zugeordnet.

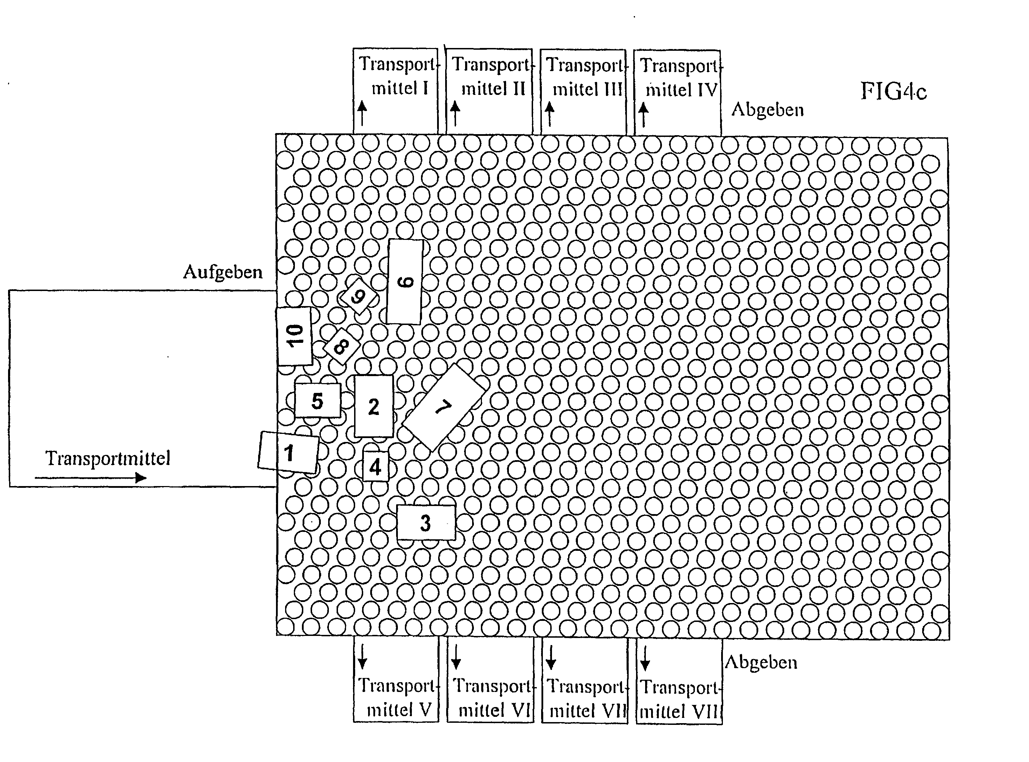

FIG 4c illustriert den Beginn des Sortiervorganges, d.h. die Stückgüter werden zielgerichtet auf die entsprechende Sortierendstelle oder ein vorrichtungsinternes Zwischenziel (hier zum Beispiel die Speicherplätze für das statische Sequenzen) hin bewegt. Die Stückgüter haben das Transportmittel "Aufgeben" verlassen. Der Vereinzelungsvorgang ist abgeschlossen. Gleichzeitig erfolgt gemäß der Handhabungsaufgabe die Ausrichtung der Stückgüter. Dieser Ausrichtungsvorgang erfolgt während der gesamten Handhabung der Stückgüter auf der Vorrichtung, deshalb wird er im Weiteren nicht mehr erwähnt. Die Stückgüter 1 bis 4 haben in Richtung auf ihr Ziel, das TM VIII, die Reihenfolge 3, 4, 2, 1.

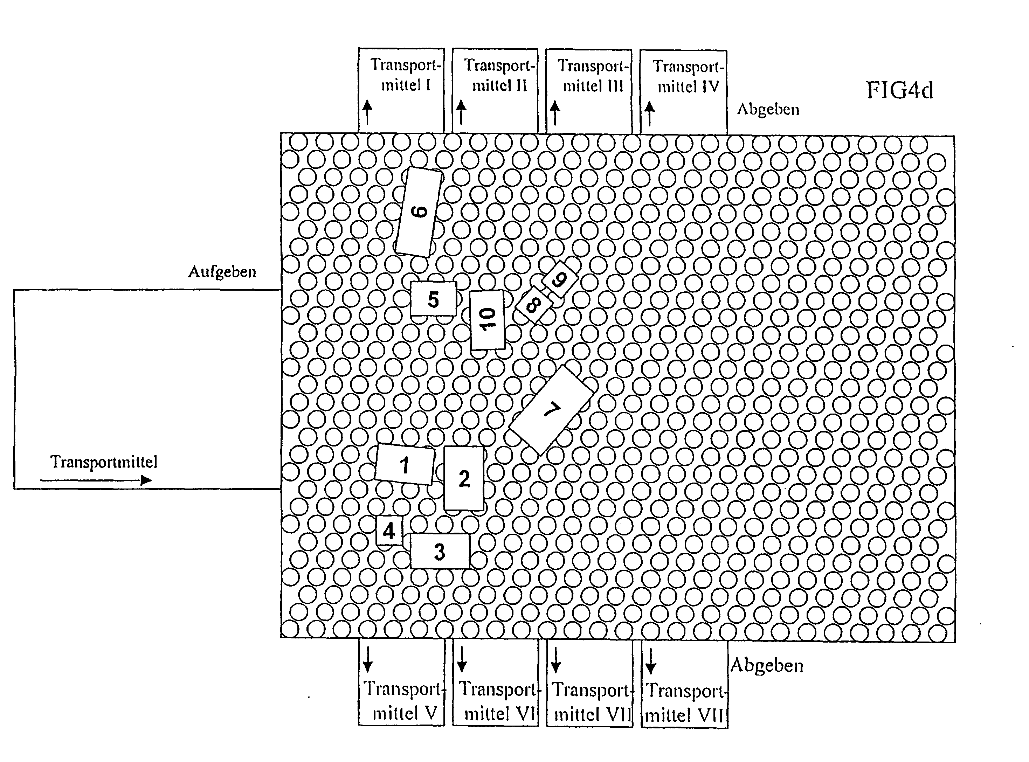

FIG 4d zeigt die Fortsetzung de Sortiervorganges und den Beginn des dynamischen und statischen Sequenzens. Um aus der Stückgut - Reihenfolge 3, 4, 2, 1 die gewünschte Zielreihenfolge 1, 2, 3, 4 zu erzeugen, "überholen" die Stückgüter 2 und 1 die Stückgüter 3 und 4 . Das Stückgut 5 wird in Richtung TM II, der ihm zugewiesenen Sortierendstelle, transportiert. Das Stückgut 6 wird in Richtung TM I, "seiner" Sortierendstelle, transportiert. Das Stückgut 7 ist kurz vor dem Erreichen seiner Speicherposition. Die Stückgüter 8, 9 und 10 werden in Richtung ihrer zum statischen Sequenzen zugewiesenen Zwischenspeicherplätze bewegt.

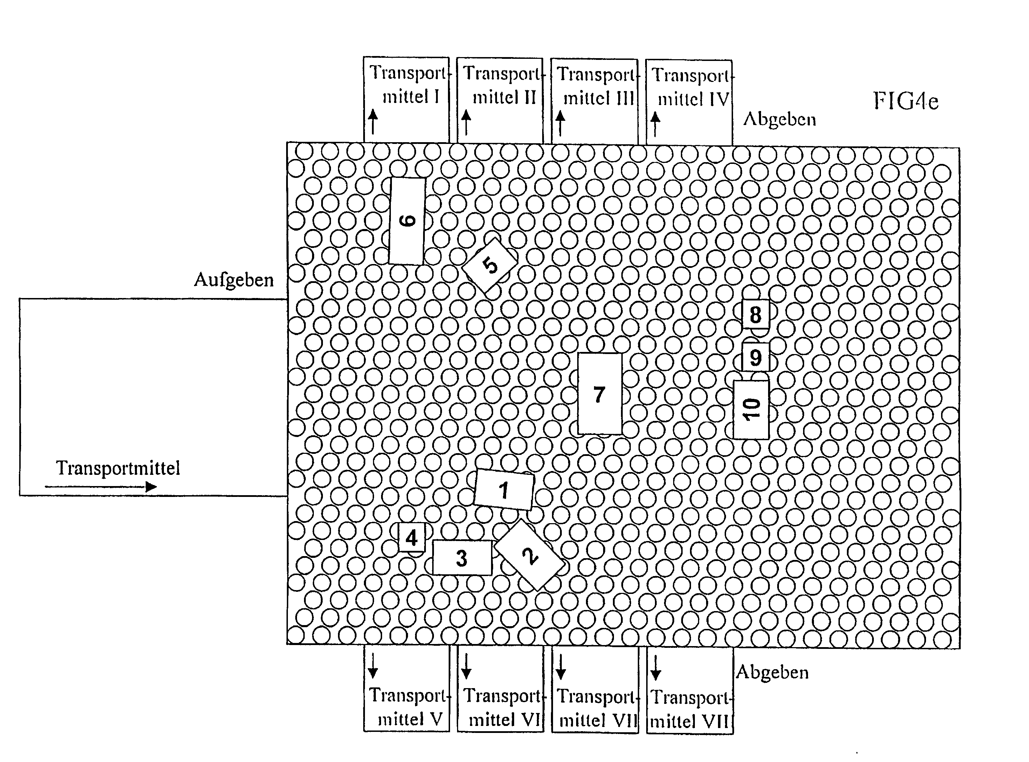

FIG 4e wird die Fortsetzung des Sortierens, des dynamischen und statischen Sequenzens und des Speicherns veranschaulicht. Das Stückgut 2 hat die Stückgüter 3 und 4 überholt und das Stückgut 1 befindet sich zwischen 2 und 3 , muß also noch das Stückgut 2 passieren, damit die korrekte Reihenfolge erreicht wird. Das Stückgut 5 wird weiter in Richtung TM II gefördert, ebenso das Stückgut 6 in Richtung TM I. Das Stückgut 7 hat seine Speicherposition erreicht und wird dort gestoppt. Die Stückgüter 8 , 9 und 10 werden auf ihren, ihnen zum statischen Sequenzen zugewiesenen, Zwischenspeicherplätzen angehalten.

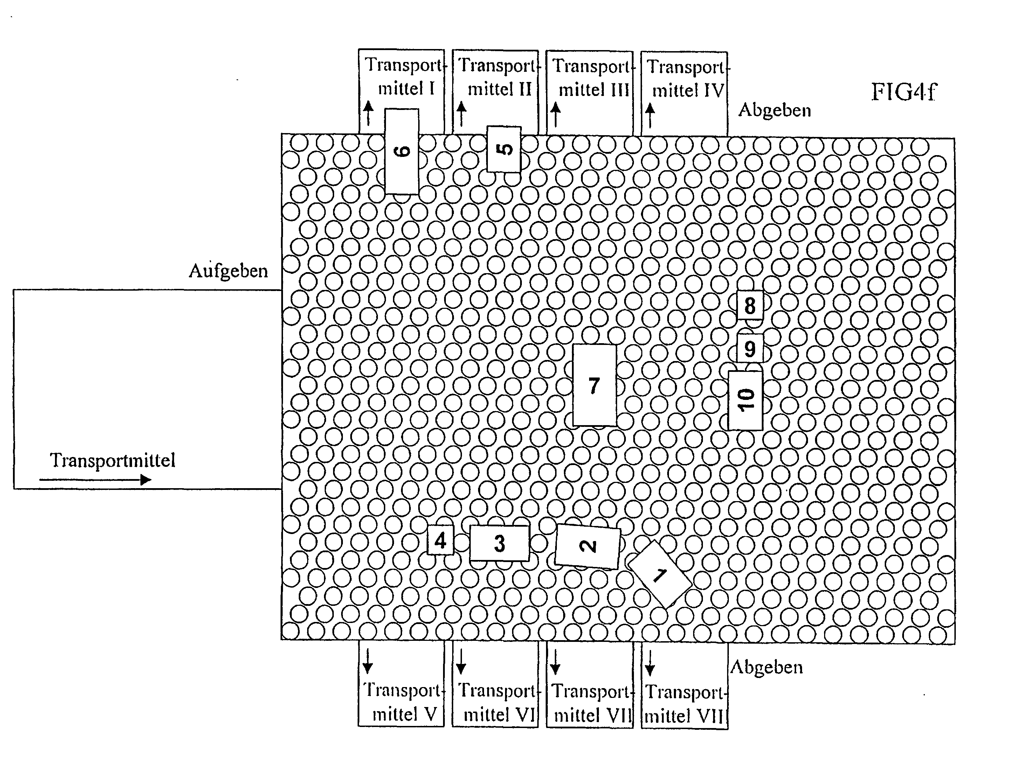

FIG 4f wird die weitere Fortsetzung des Sortierens, des dynamischen und statischen Sequenzens und des Speicherns gezeigt. Das Stückgut 1 hat die Stückgüter 2 , 3 und 4 überholt und damit ist die korrekte Reihenfolge 1, 2, 3, 4 erreicht. Die Sequenz 1 , 2 , 3 und 4 wird in Richtung TM VIII, ihrer Sortierendstelle, transportiert. Das dynamische Sequenzen ist damit abgeschlossen. Die Stückgüter 5 und 6 haben ihre Sortierendstellen TM II und TM I erreicht und werden auf die abführenden TM abgegeben.

Das Stückgut 7 verharrt auf seiner Speicherposition bis zum Initiieren der Ausspeicherung durch das entsprechende Steuerungskommando. Die Stückgüter 8 , 9 und 10 verbleiben bis zum Eintreffen des entsprechenden Steuerkommandos zum Abtransport zur Sortierendstelle TM IV auf ihren Zwischenspeicherplätzen.

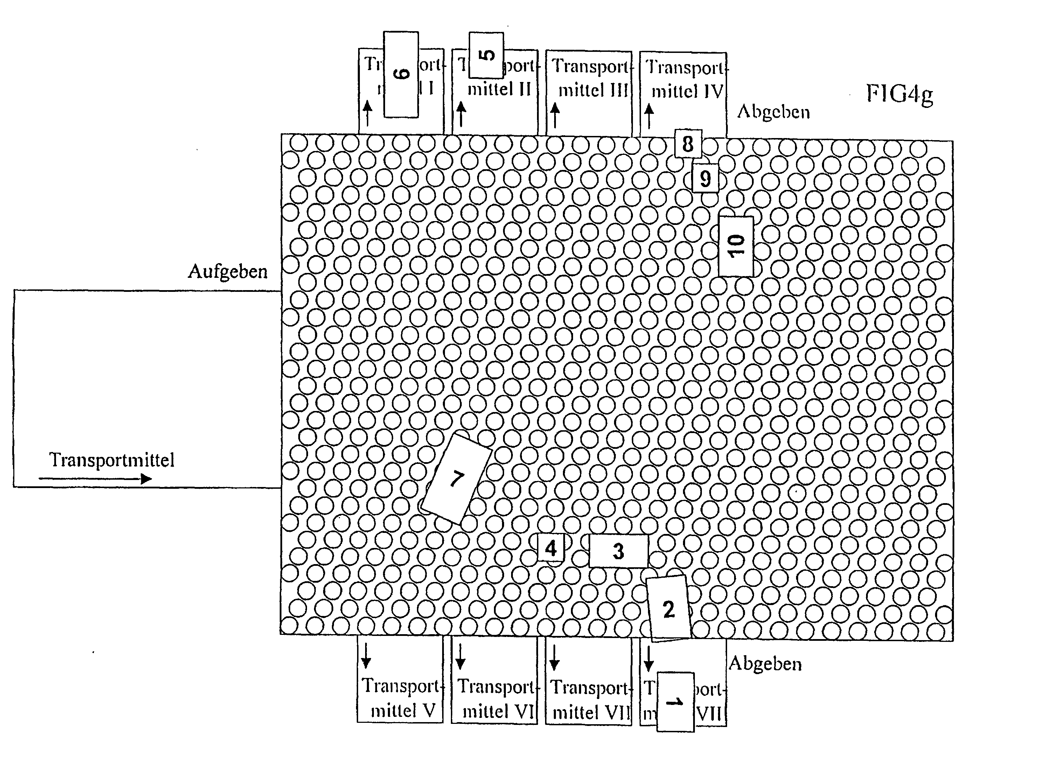

FIG 4g zeigt die Fortsetzung des Sortierens, das Ausspeichern und das Beenden des statischen Sequenzens. Die Sequenz der Stückgüter 1 , 2 , 3 und 4 hat mit Stückgut 1 ihre Sortierendstelie TM VIII erreicht und wird dort von der Vorrichtung abgegeben. Die Stückgüter 5 und 6 haben die Vorrichtung verlassen. Das Kommando zum Ausspeicher des Stückgutes 7 wurde bereits gegeben, somit befindet es sich auf dem Weg zu seiner Sortierendstelle, dem TM V. Das Steuerkommando zum Abtransport der Stückgüter 8 , 9 und 10 wurde gegeben und sie werden unter Beibehaltung ihrer Reihenfolge in Richtung TM IV transportiert, dabei hat Stückgut 8 bereits das TM VIII erreicht.

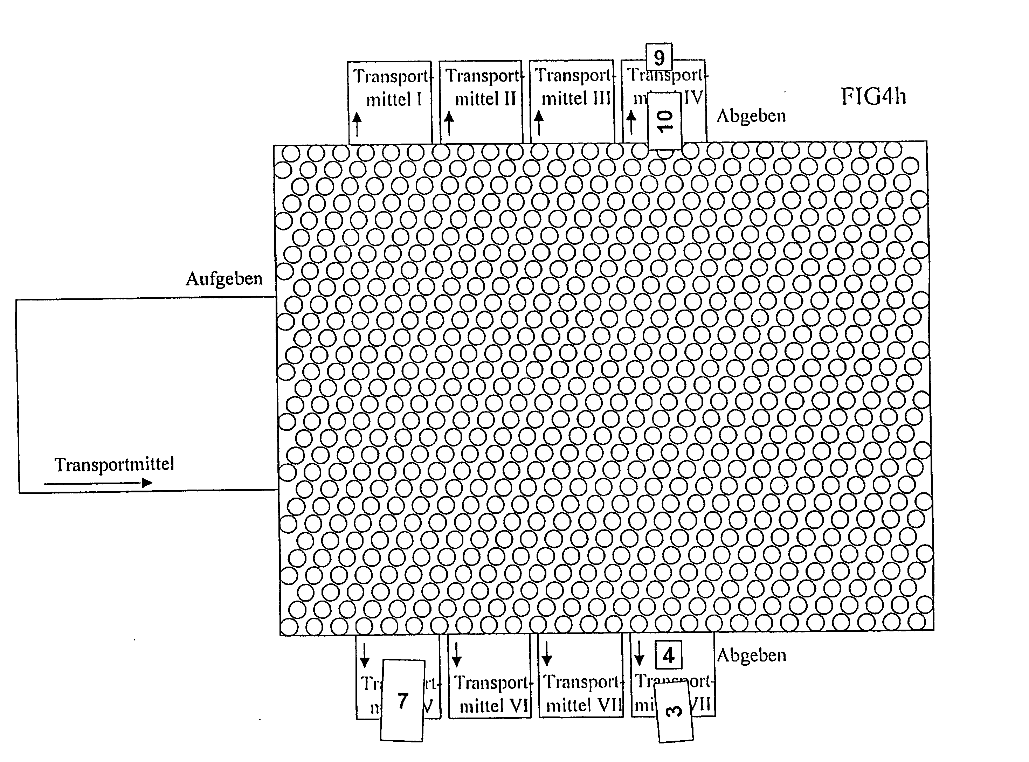

FIG 4h zeigt den Endzustand der Handhabungsprozesse. Alle Stückgüter wurden von der Vorrichtung abgegeben, befinden sich dabei zum Teil noch auf den ihnen als Sortierendstellen zugeordneten, abgebenden Transportmitteln.

## Patentansprüche

1. Vorrichtung zum Handhaben von Stückgütern, die durch Transportmittel neben- und/oder hintereinander liegend zuund abgeführt werden, mit mindestens einem Eingang, mindestens einem Ausgang und mindestens einer Bildverarbeitungseinrichtung (3) zur Ermittlung von die Stückgüter (1) klassifizierenden Handhabungsinformationen aus den aufgenommenen Abbildern der Stückgüter (1),
**gekennzeichnet durch**
mehrere in einer Ebene arrayförmig angeordnete, jeweils mindestens in 4 Richtungen senkrecht zueinander antreibbare Fördermittel (7), wobei von stets mindestens 3 Fördermittel (7) eines der Stückgüter(1) in der Ebene bewegbar ist und mindestens eine Steuereinrichtung (6) zur unabhängigen Ansteuerung jedes einzelnen Fördermittels (7) mindestens hinsichtlich Förderrichtung und -zeitraum, um entsprechend dem aktuellen Handhabungsplan, der die auszuführenden Handhabungen den Handhabungsinformationen der Stückgüter (1) zuordnet, die Stückgüter (1) kollisionsfrei zu bewegen, wobei hierzu Ort und Lage jedes klassifizierten Stückgutes (1) online **durch** Verfolgung der codierten Abbildungen oder Grundrisse mit Hilfe der Bildverarbeitungseinrichtung (3) und/oder weiterer Sensoreinrichtungen ermittelt wird.

2. Vorrichtung nach Anspruch 1,
**dadurch gekennzeichnet, daß**
die Fördermittel (7) einen drehbaren, kugelförmigen Transportteil besitzen, der ohne feste Achse so gelagert und angetrieben ist, daß die Transportrichtung frei wählbar ist.

3. Vorrichtung nach Anspruch 1 oder 2,
**dadurch gekennzeichnet, daß**
die Fördergeschwindigkeit und der Beschleunigungs- und Bremsverlauf jedes Fördermittels (7) durch die Steuereinrichtung (6) wählbar ist.

4. Vorrichtung nach Anspruch 1,
**dadurch gekennzeichnet, daß**
zur Ermittlung von Ort und Lage der einzelnen Stückgüter (1) neben der die belegten Flächen aufnehmenden Bildverarbeitungseinrichtung (3) eine das Höhenprofil aufnehmende Sensoreinrichtung vorgesehen ist.

5. Vorrichtung nach Anspruch 1,
**dadurch gekennzeichnet, daß**
zur Ermittlung von Ort und Lage der einzelnen Stückgüter (1) jedes Fördermittel (7) einen Stückgut (1) detektierenden Druckaufnehmer aufweist.

## Claims

1. Apparatus for handing individually packaged goods, which are fed and discharged lying beside and/or behind one another by transport means, having at least one input, at least one output and at least one image processing device (3) for determining handling information classifying the individually packed goods (1) from the recorded images of the individually packaged goods (1),
**characterized by**
a plurality of conveying means (7) which are arranged in the manner of an array in one plane and can be driven in each case at least in four directions at right angles to one another,
one of the individually packaged items (1) always being movable in the plane by at least three conveying means (7),
and by at least one control device (6) for the independent activation of each individual conveying means (7), at least with regard to conveying direction and period, in order to move the individually packaged goods (1) without collision in accordance with the current handling plan, which links the handling to be carried out with the handling information about the individually packaged goods (1),
for this purpose the location and orientation of each classified item (1) being determined online by tracking the coded images or outlines with the aid of the image processing device (3) and/or further sensor devices.

2. Apparatus according to Claim 1, **characterized in that** the conveying means (7) possess a rotatable, spherical transport part, which is mounted without a fixed axis and is driven in such a way that the transport direction can be selected freely.

3. Apparatus according to Claim 1 or 2, **characterized in that** the conveying speed and the acceleration and braking pattern of each conveying means (7) can be selected by the control device (6).

4. Apparatus according to Claim 1, **characterized in that** in order to determine the location and orientation of the individual items (1), a sensor device which records the height profile is provided in addition to the image processing device (3) which records the occupied areas.

5. Apparatus according to Claim 1, **characterized in that** in order to determine the location and orientation of the individual items (1), each conveying means (7) has a pressure sensor which detects an item (1).

## Revendications

1. Dispositif pour manipuler des marchandises en colis qui sont apportées et enlevées en étant disposées les unes à côté et/ou derrière les autres par des moyens de transport, comprenant au moins une entrée, au moins une sortie et au moins une installation de traitement par images (3) destinée à déterminer, à partir des prises de vue des marchandises en colis (1), les informations de manipulation qui classent les marchandises en colis (1),
**caractérisé par** plusieurs moyens de convoyage (7) qui sont disposés dans un plan sous forme de réseaus et qu'on peut entraîner perpendiculairement l'un à l'autre à chaque fois dans au moins 4 directions, l'une des marchandises en colis (1) pouvant être déplacée dans le plan par toujours au moins 3 moyens de convoyage (7), et par au moins une installation de commande (6) destinée à commander indépendamment, au moins pour ce qui est de la direction et de la durée de convoyage, chacun des moyens de convoyage (7) particuliers afin de déplacer les marchandises en colis (1) sans collision en fonction du plan de manipulation en cours qui associe les manipulations à effectuer aux informations de manipulation des marchandises en colis (1) - à cet effet le lieu et la position de chaque marchandise en colis (1) classée sont établis en ligne grâce au suivi des images codées ou des silhouettes à l'aide de l'installation de traitement par images (3) et/ou d'autres installations de capteurs.

2. Dispositif selon la revendication 1 **caractérisé en ce que** les moyens de convoyage (7) possèdent une pièce de transport sphérique qui peut tourner et qui est montée sans axe fixe et est entraînée de telle manière que la direction de transport peut être librement choisie.

3. Dispositif selon la revendication 1 ou 2 **caractérisé en ce que** la vitesse de convoyage et le profil d'accélération et de freinage de chaque moyen de convoyage (7) peut être choisi par l'installation de commande (6).

4. Dispositif selon la revendication 1 **caractérisé en ce que**, pour déterminer le lieu et la position des marchandises en colis (1) particulières, une installation de capteurs qui enregistre le profil de hauteur est prévue à côté de l'installation de traitement par images (3) qui enregistre les surfaces occupées.

5. Dispositif selon la revendication 1 **caractérisé en ce que** chaque moyen de convoyage (7) présente un capteur de pression qui détecte une marchandise en colis (1) pour déterminer le lieu et la position des marchandises en colis (1) particulières.
